Europäisches Patentamt

European Patent Office

Office européen des brevets

(11) Veröffentlichungsnummer: **0 393 216**
**A1**

## (12) EUROPÄISCHE PATENTANMELDUNG

(21) Anmeldenummer: **89106926.2**

(51) Int. Cl.⁵: **B60D 1/04**

(22) Anmeldetag: **18.04.89**

(43) Veröffentlichungstag der Anmeldung:
**24.10.90 Patentblatt 90/43**

(84) Benannte Vertragsstaaten:
**AT DE ES FR GB IT NL**

(71) Anmelder: **ROCKINGER Spezialfabrik für
Anhängerkupplungen GmbH & Co.
Waldmeisterstrasse 80 Postfach 45 04 64
D-8000 München 45(DE)**

(72) Erfinder: **Baumgartner, Richard
Lichtenweg 15
D-8254 Isen(DE)**
Erfinder: **Letonja, Drago
Rosenheimer Strasse 117
D-8000 München 80(DE)**

(74) Vertreter: **Blumbach Weser Bergen Kramer
Zwirner Hoffmann Patentanwälte
Radeckestrasse 43
D-8000 München 60(DE)**

(54) **Hakenkupplung.**

(57) Beschrieben wird eine Hakenkupplung mit einem Zughaken (2) zur Aufnahme der Ringöse der Zustange eines über die Hakenkupplung an ein Zugfahrzeug anzukuppelnden Anhängers oder dergleichen. Ein Niederhalter (3) ist zwischen einer Schließstellung und einer Öffnungsstellung verstellbar und verhindert in seiner Schließstellung ein ungewolltes Herausgleiten einer eingekuppelten Ringöse. Zur Erzielung einer möglichst kurzen Baulänge einer solchen Hakenkupplung ist der Niederhalter (3) so ausgebildet und im Kupplungskörper (1) angeordnet, daß er in seiner Schließstellung unverdrehbar geführt wird, nach Entfernen eines Sperrstifts (21) aber vertikal in eine Stellung hochgezogen werden kann, aus der er um eine vertikale Achse in die Öffnungsstellung zur Seite verschwenkbar ist.

FIG. 1

# HAKENKUPPLUNG

Die Erfindung betrifft eine Hakenkupplung mit einem zur Aufnahme der Zugöse einer Zugstange ausgebildeten, von einem Kupplungskörper getragenen Haken und einen Niederhalter, der zwischen einer die Hakenöffnung freigebenden Öffnungsstellung und einer die Hakenöffnung versperrenden Schließstellung beweglich ist.

Hakenkupplungen dieser Art sind bekannt. Der Haken ist dabei in der Mitte zwischen zwei schrägen Fangschalen angeordnet, die das Einführen der Zugöse in den Haken erleichtern sollen. Der Niederhalter dient in seiner Schließstellung dazu, ein ungewolltes Herausspringen der Zugöse aus dem Haken zu verhindern. Bei der bekannten Hakenanordnung ist der Niederhalter oberhalb des Hakens und versetzt in Richtung des Zugfahrzeugs, an dem die Hakenkupplung angebracht wird, um eine horizontale Achse schwenkbar in dem Kupplungskörper gelagert und wird bei Überführung von der Schließstellung in die Öffnungsstellung um diese Achse in Richtung auf das Zugfahrzeug verschwenkt.

Ein bevorzugtes Einsatzfeld derartiger Hakenkupplungen sind landwirtschaftliche Fahrzeuge, zum Beispiel Ackerschlepper. Bei ihnen wird die Hakenkupplung höhenverstellbar am Heck angeordnet. Zu diesem Zweck sind am Heck des Zugfahrzeuges in einer beispielsweise aus der EP-A-0 155 338 bekannten Weise zwei vertikal verlaufende, parallele Lochschienen angebracht, in denen der Kupplungskörper vertikal verstellbar geführt und in einer gewünschten Höhenlage durch Bolzen arretiert wird. Bei mit einer Zapfwelle ausgestatteten Ackerschleppern wird die Hakenkupplung überwiegend unterhalb der Zapfwelle arretiert. Bei diesen Anwendungen erfordert der nach oben und hinten zu verschwenkende Niederhalter der bekannten Hakenkupplung einen entsprechend großen Abstand der Hakenkupplung von der Zapfwelle einerseits und vom Schlepperheck andererseits. Der erforderliche Abstand von der Zapfwelle bereitet Probleme, da üblicherweise unter der Zapfwelle unter Berücksichtigung der notwendigen Bodenfreiheit nicht viel Raum zur Verfügung steht. Der Abstand der Hakenkupplung vom Schlepperheck bestimmt den Angriffspunkt der Stützlast. Diese Stützlast kann wegen der Hebelwirkung umso größer sein, je dichter ihr Angriffspunkt am Schlepperheck liegt.

Aufgabe der Erfindung ist es, eine Hakenkupplung der beschriebenen Art so auszugestalten, daß trotz einfacher Bedienbarkeit eine geringere Baulänge erreicht wird, als dies bisher möglich war.

Diese Aufgabe wird erfindungsgemäß durch eine Hakenkupplung gemäß Patentanspruch 1 gelöst.

Durch Ausbildung des Niederhalters mit zweistufiger Hub-und Schwenkbewegung ist für die Betätigung des Niederhalters kein zusätzlicher Platzbedarf in Richtung des Hecks des Zugfahrzeugs erforderlich. Die Baulänge der Hakenkupplung, das heißt der Abstand von ihrer Befestigung bis zum Zughaken, kann damit klein gehalten werden, wodurch die Belastbarkeit erhöht wird.

Eine bevorzugte Gestaltung des Niederhalters ist im Patentanspruch 2 gekennzeichnet. Dadurch, daß der Niederhalter im unteren Bereich in eine Bohrung des Kupplungskörpers eingreift, kann dieser in seinem unterem Bereich mit durch gehenden Versteifungen (Rippen) versehen werden, die bei gleicher Belastbarkeit der Hakenkupplung eine leichtere Bauweise ermöglichen.

Wenn der Niederhalter, wie dies aus Sicherheitsgründen üblich ist, mit einem Sicherungsriegel versehen ist, der ein Lösen der Kupplung bei umkippendem Anhänger erlaubt, ist es besonders vorteilhaft, wenn in den zu beiden Seiten des Hakens angeordneten Fangschalen Ausnehmungen ausgebildet sind, in die der Sicherungsriegel in solch einem Sicherheitsfall eintauchen kann. Hierdurch werden eine weiter verkürzte Baulänge der Hakenkupplung und die damit verbundenen Vorteile erzielt. Außerdem trägt dieses Merkmal dadurch zu einem leichteren Einkuppeln der Zugöse bei, daß der Abstand zwischen Zughaken und Fangschalen geringer sein kann, als dies ohne die Ausnehmungen möglich wäre.

Ausführungsbeispiele der Erfindung werden nachfolgend anhand der Zeichnungen näher erläutert. Es zeigen:

Fig. 1 ein perspektivische Ansicht einer Ausführungsform der Hakenkupplung,

Fig. 2a eine Seitenschnittansicht der Hakenkupplung von Fig. 1 mit in Schließstellung befindlichem Niederhalter,

Fig. 2b eine der Fig. 2a entsprechende Ansicht mit hochgezogenem Niederhalter,

Fig. 3a eine Draufsicht auf die Hakenkupplung gemäß Fig. 1,

Fig 3b eine der Fig. 3a entsprechende Ansicht mit zur Seite geschwenktem Sicherungsriegel,

Fig. 4 eine Draufsicht auf die Hakenkupplung mit in Öffnungsstellung gebrachtem Niederhalter,

Fig. 5a eine Vorderansicht der Hakenkupplung mit in Schließstellung befindlichem Niederhalter,

Fig. 5b eine Vorderansicht entsprechend Fig. 5a, bei der sich jedoch der Niederhalter in der Öffnungsstellung befindet, und

Fig. 6a bis 6c alternative Ausführungsformen des Sperrstifts.

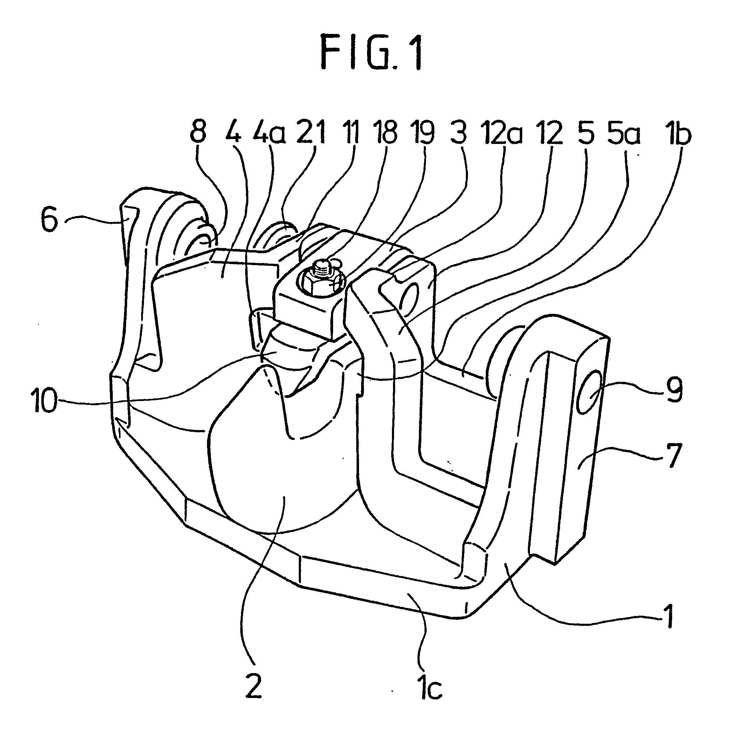

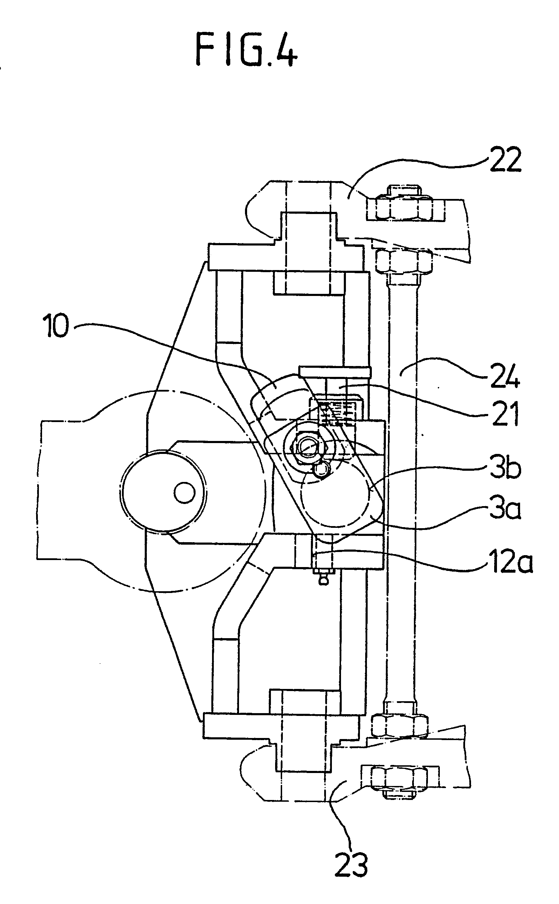

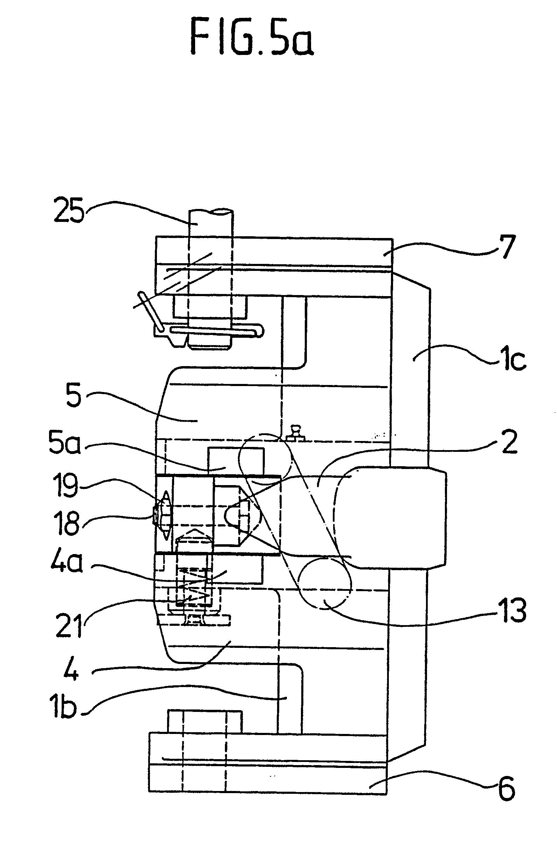

Gemäß Darstellung in Fig. 1 setzt sich die Hakenkupplung aus einem Kupplungskörper 1 mit einem Haken 2 und einem Niederhalter 3 zusammen. Auf jeder Seite des Hakens 2 ist im Kupplungskörper 1 eine Fangschale 4, 5 ausgebildet, die in bekannter Weise die (in Fig. 1 nicht dargestellte) Zugöse beim Einkuppeln zentrieren und damit das Einkuppeln erleichtern. An beiden Seiten des Kupplungskörpers 1 sind vertikal verlaufende Führungsteile 6, 7 ausgebildet und dazu vorgesehen, in entpsrechende Führungskanäle von am Heck des Zugfahrzeugs vorgesehenen Führungsschienen 22 (siehe Fig. 4) einzugreifen. Die Führungsteile 6, 7 sind je mit einer Bohrung 8, 9 versehen, in die Bolzen 25 (siehe Fig. 5a) eingesteckt werden, um den Kupplungskörper in einer gewünschten Höhenlage in den Führungsschienen zu arretieren.Die Fangschalen 4, 5 und Führungswangen 11, 12 bilden zusammen mit dem Boden 1c und einer Rückenwand 1b einen kastenartigen Aufbau des Kupplungskörpers, der bei relativ leichter Bauweise zu einer großen Steifigkeit führt.

Der in Fig. 1 in seiner Schließstellung dargestellte Niederhalter 3 ist an seinem vorderen, dem Haken 2 zugewandten Ende mit einem Sicherungsriegel 10 ausgestattet, der später noch näher erläutert wird.

Der in Fig. 1 erkennbare Kopf des Niederhalters 3 befindet sich in der Schließstellung zwischen den seitlichen Führungswangen 11, 12 des Kupplungskörpers, die beim dargestellten Ausführungsbeispiel als sich in Richtung auf das Zugfahrzeug erstreckende, im wesentlichen parallel verlaufende Ansätze der Fangschalen 4, 5 ausgebildet sind. In der Schließstellung ist der Niederhalter damit durch Formschluß an einer Drehung um eine in Fig. 1 vertikale Achse gehindert. Der Begriff "vertikal" bezieht sich im Rahmen der Patentansprüche und der Beschreibung auf die Gebrauchslage der Kupplung, wie sie in Fig. 1 dargestellt ist.

In der aus Fig. 1 ersichtlichen Schließstellung des Niederhalters 3 versperrt dessen Sicherungsriegel 10 die Öffnung des Hakens 2, so daß weder aus- noch eingekuppelt werden kann. Hierzu müßte der Niederhalter 3 zunächst in seine Öffnungsstellung gebracht werden. Dies erfolgt erfindungsgemäß durch Hochziehen des Niederhalters 3 aus der dargestellten Schließstellung in Vertikalrichtung, bis sich der Kopf des Niederhalters oberhalb der seitlichen Führungswangen 11, 12 befindet. In dieser Stellung kann der Niederhalter, wie später noch im einzelnen erläutert werden wird, um eine vertikale Achse zur Seite geschwenkt werden, um dann den Haken zum Ein- und Auskuppeln freizugeben.

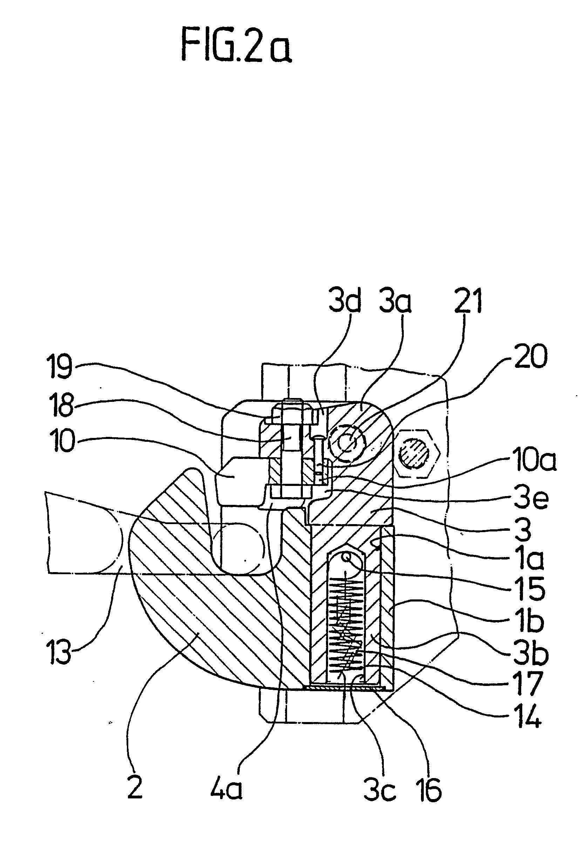

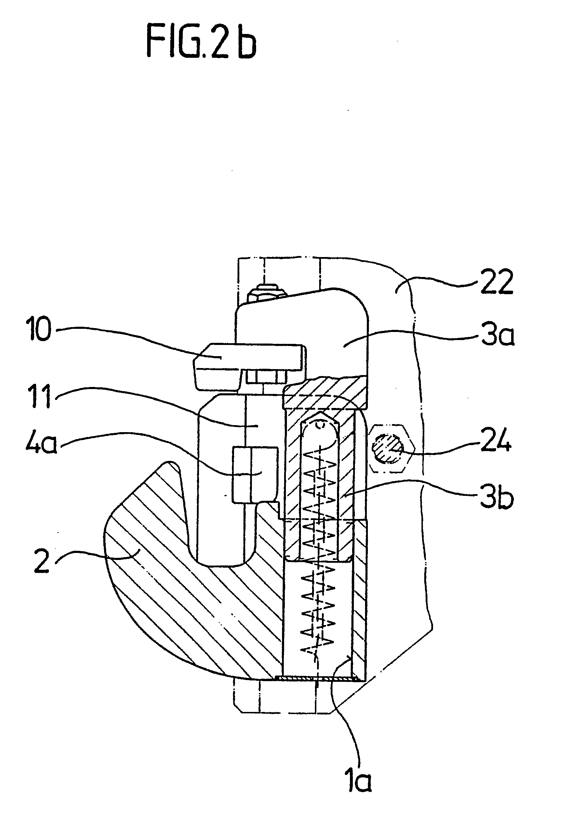

Es sei nun auf die Seitenschnittdarstellungen der Fig. 2a und 2b Bezug genommen.

Fig. 2a zeigt die Hakenkupplung mit in Schließstellung befindlichem Niederhalter 3, eine eingekuppelte Ringöse 13 ist gestrichelt dargestellt. Der Niederhalter 3 setzt sich aus einem Kopf 3a und einem zylindrischen Schaft 3b zusammen. Der Schaft 3b ist in einer in dem Kupplungskörper hinter dem Haken 2, das heißt zwischen Haken 2 und Rückwand 1b, ausgebildeten Bohrung 1a drehbar und verschiebbar gelagert. Der zylindrische Schaft 3b ist seinerseits mit einem nach unten offenen Sackloch 3c versehen, in dem eine Zugfeder 14 angeordnet ist. Die Zugfeder 14 greift einerseits über einen Stift 15 am Niederhalter 3 und andererseits über einen die Bohrung 1a verschließenden Deckel 16 am Kupplungskörper 1 an. Innerhalb der Feder erstreckt sich eine Kette 17 als Wegbegrenzung für den Niederhalter 3, wie es aus Fig. 2b ersichtlich ist. Die Kette stellt eine einfache, preiswerte Möglichkeit der Wegbegrenzung dar. Dies schließt den Einsatz anderer Mittel für diesen Zweck nicht aus.

Der Kopf 3a des Niederhalters 3 ist vorn, das heißt in Richtung auf den Haken 2, mit einer Ausnehmung 3e versehen, innerhalb derer der Sicherungsriegel 10 mit Hilfe einer Schraube 18 und einer Mutter 19 befestigt ist. Ein in fluchtenden Bohrungen 3d des Kopfs des Niederhalters bzw. 10a des Sicherungsriegels befindlicher Stift oder Niet 20 verhindert eine Drehung des Sicherungsriegels 10 relativ zum Niederhalter 3 um die Längsachse der Schraube 18. Der Sicherriegel 10 erfüllt eine an sich bekannte Sicherungsfunktion, die beim Umkippen des über die Zugöse 13 und die Hakenkupplung an das Zugfahrzeug angekuppelten Anhängers verhindern soll, daß das Zugfahrzeug mit umkippt. Beim Umkippen des Anhängers wird der axiale zulässige Zugösenschenkwinkel (etwa 25°) im Zughaken 2 überschritten. Übersteigt das dabei auf den Sicherungsriegel 10 ausgeübte Drehmoment einen vorgegebenen Wert, dann wird der Niet 20 abgeschert, so daß sich der Sicherungsriegel 10 relativ zum Niederhalter 3 um die Schraube 18 verschwenken kann und den Weg freigibt, so daß die Zugöse bei "geschlossener" Kupplung aus dem Haken 2 gleiten kann. Zu diesem Zweck sind in den Fangschalen 4, 5 Ausnehmungen 4a, 5a ausgebildet, in die der Sicherungsriegel bei dieser Schwenkbewegung eintaucht. Diese Ausnehmungen 4a und 5a tragen zu der angestrebten kurzen Baulänge der Hakenkupplung bei. Ohne diese Ausnehmungen müßte die Öffnung des Hakens 2 bezogen auf die Fangschalen 4, 5 weiter in Richtung auf den anzukuppelnden Anhänger versetzt sein, um einen zur Freigabe der Hakenkupplung ausreichenden Schwenkweg des Sicherungsriegels 10 zu gewährleisten. Dies würde neben einer Verlängerung der Baulänge auch zu einer Beeinträchtigung der Zentrierungsfunktion der Fangschalen 4, 5 führen.

Der Niederhalter 3 ist in seiner Schließstellung durch einen Sperrstift 21 gegen ein Herausziehen gesichert. Wenn der Sperrstift 21 herausgezogen wird, kann der Niederhalter aus der in Fig. 2a erkennbaren Stellung in die in Fig. 2b dargestellte Stellung hochgezogen werden. In der hochgezogenen Stellung liegt der Kopf 3a des Niederhalters mit dem Sicherungsriegel 10 über den Oberkanten der Führungswangen 11 und 12, so daß der Niederhalter 3 nun um die Achse seines zylindrischen Schafts 3b zur Seite geschwenkt werden kann. Wie aus Fig. 2b ersichtlich, ist der Schaft 3b in dieser hochgezogenen Stellung des Niederhalters noch in der Bohrung 1a des Kupplungskörpers 1 geführt. Bei der in den Fig. dargestellten Ausführungsform ist, wie am besten aus Fig. 1 erkennbar, in der rechten Führungswange 12 eine Stufe 12a ausgebildet. Wird der Niederhalter 3 aus der in Fig. 2b dargestellten hochgezogenen Lage (in Fig. 1 im Uhrzeigersinn) gedreht, dann bildet die Stufe 2a einen Anschlag für den Kopf 3a des Niederhalters 3, wenn dieser um einen für das Ein- und Auskuppeln ausreichenden Winkel gedreht wurde (siehe auch Fig. 4).

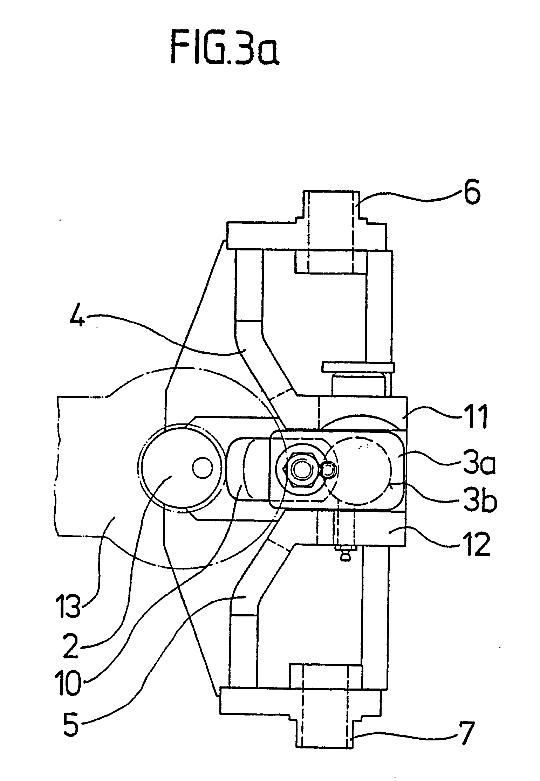

Fig. 3a zeigt eine Draufsicht von oben auf die Hakenkupplung mit in Schließstellung befindlichem Niederhalter. Man erkennt die formschlüssige Führung des Kopfes 3a des Niederhalters zwischen den Führungswangen 11 und 12, die in dieser Stellung ein Verdrehen des Niederhalters verhindern. Man erkennt außerdem den vom Kopf 3a des Niederhalters vorstehenden Sicherungsriegel 10, der ein Herausgleiten der Zugöse 13 aus dem Haken 2 verhindert.

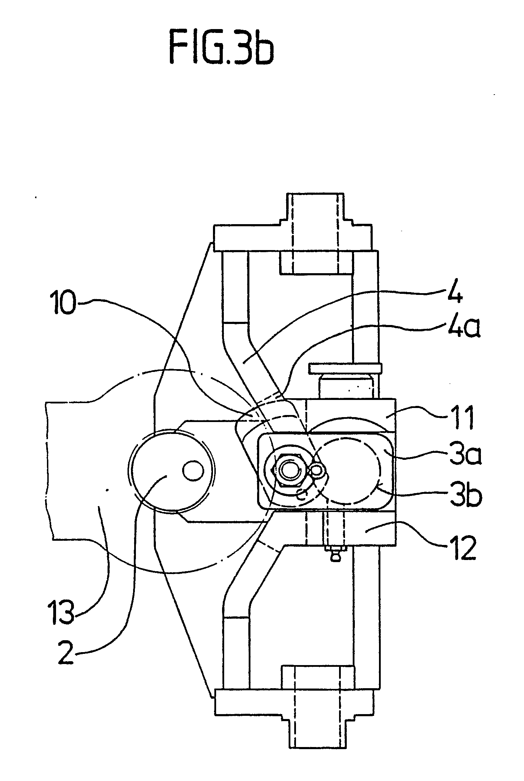

Fig. 3b ist eine der Fig. 3a entsprechende Draufsicht mit in beschriebener Weise zur Seite geschwenktem und in die Ausnehmung 4a der Fangschale 4 eingetauchtem Sicherungsriegel 10.

Fig. 4 ist eine Draufsicht auf die entriegelte, das Einkuppeln und Auskuppeln erlaubende Hakenkupplung. Der Sperrstift 21 ist zur Ermöglichung der Entriegelung herausgezogen.

In Fig. 4 sind die am Heck des Zugfahrzeugs befestigten Führungsschienen 22 und 23 angedeutet, die durch eine Versteifungsstange 24 miteinander verbunden sind. Aus Fig. 4 ist besonders gut zu erkennen, daß aufgrund des erfindungsgemäßen Aufbaus zur Überführung der Hakenkupplung in den entriegelten Zustand kein zusätzlicher Raum hinter der Hakenkupplung zur Aufnahme des Niederhalters benötigt wird.

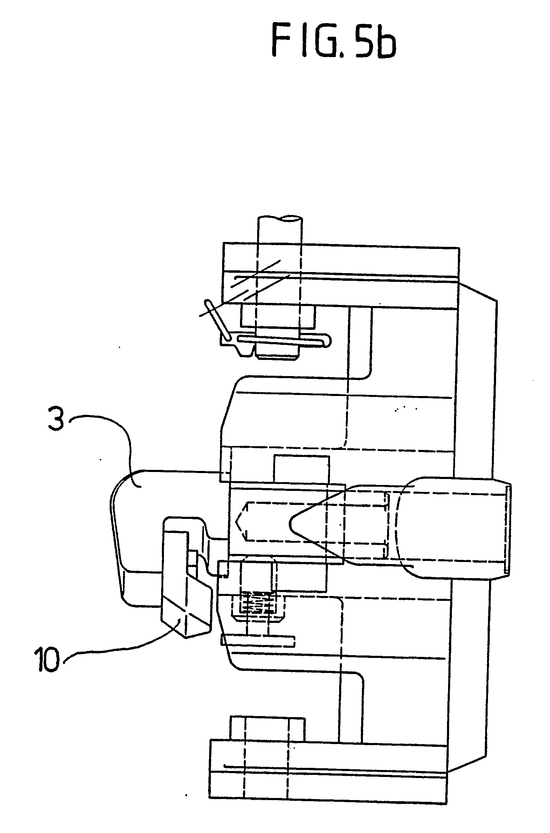

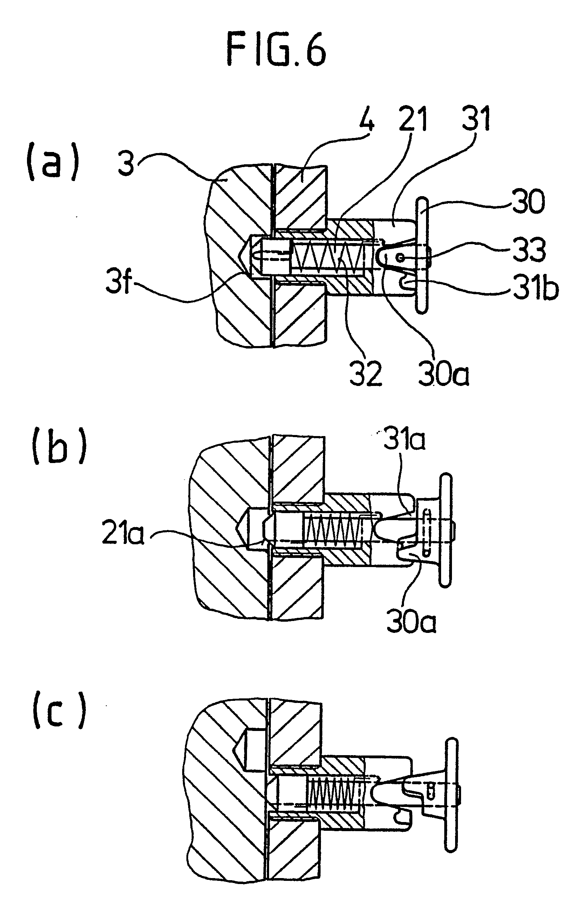

Fig. 5a ist eine Vorderansicht der geschlossenen Hakenkupplung. Hier ist die Schräglage der Zugöse 13 angedeutet, die bei einem Umkippen des Anhängers auftreten und eine Auslösung des Sicherungsriegels 10 bewirken kann. Fig. 5a zeigt ferner die Anordnung des Sperrstifts 21, für den eine mög liche Ausführungsform im einzelnen später noch anhand der Fig. 6a bis 6c erläutert werden. Fig. 5b zeigt die Vorderansicht der Hakenkupplung mit in Öffnungsstellung bewegtem Niederhalter 3.

Die Fig. 6 zeigt unter a), b) und c) in verschiedenen Betriebszuständen eine mögliche Ausfuhrungsform des Sperrstifts 21, der zur Ermöglichung einer Einhandbedienung der Hakenkupplung mit einer Griffscheibe 30, einer Hülse 31 und einer Dreh-Druckfeder 32 versehen ist. Die den Sperrstift 21 haltende Hülse 31 ist in eine Bohrung in der Führungswange 4 eingeschraubt.Der Sperrstift greift in seiner Sperrstellung in ein Sackloch 3f des Niederhalters 3 ein. Diese Stellung ist in Fig. 6a gezeigt. Der Sperrstift 21 wird mittels der Dreh-Druckfeder 32 in seiner Sperrstellung gehalten. Die Dreh-Druckfeder 32 ist mit einem Ende in der feststehenden, in die Führungswange 4 eingeschraubten Hülse 31 und mit dem anderen Ende im drehbaren und verschiebbaren Sperrstift 21 gehalten. Der Sperrstift 21 ist mit der Griffscheibe 30 mit Hilfe eines Stifts 33 fest verbunden. An der Griffscheibe 30 ist ein Nocken 30a ausgebildet. In der Sperrstellung von Fig. 6a greift dieser Nocken 30a in eine Vertiefung 31a der Hülse 31 ein. Zur Entriegelung wird der Sperrstift 21 mittels der Griffscheibe 30 zurückgezogen und gegen die Kraft der Dreh-Druckfeder 32 gedreht, bis der Nocken 30a in eine Hinterschneidung 31b der Hülse 31 einrastet und den Sperrstift 21 in der Entriegelungsstellung hält. Durch das dann erfolgende Hochziehen des Niederhalters 3 wird über die Schräge 21a an der freien Stirnfläche des Sperrstifts 21 letzterer etwas aus der Hülse herausbewegt, so daß der Nocken 30a aus der Hinterschneidung 31b herausgehoben wird. Die vorgespannte Dreh-Druckfeder 32 dreht den Sperrstift 21 in die in Fig. 6c dargestellte Bereitschaftsstellung, aus der er wieder zur Verriegelung des Niederhalters unter der Federkraft nach vorn stößt, sobald der Niederhalter wieder nach unten kommt und sein Sackloch 3f mit dem Sperrstift 21 ausgerichtet ist.

Es sei betont, daß es sich hierbei um eine die Bedienung erleichternde Ausführung des Sperrstifts handelt, daß aber grundsätzlich zur Verriegelung des Niederhalters in seiner Schließstellung anderer Ausführungen eines Sperrstifts oder andere Sperrglieder möglich sind. So könnte beispielsweise ein Sperrstift durch fluchtende Bohrungen in beiden Führungswangen 11, 12 und im Kopf 3a des Niederhalters 3 gesteckt werden, um den Niederhalter in seiner Schließstellung zu verriegeln.

**Ansprüche**

1. Hakenkupplung, umfassend einen zur Aufnahme einer Zugöse (13) ausgebildeten, an einem Kupplungskörper (1) befestigten Haken (2) und einen Niederhalter (3), der zwischen einer die Hakenöffnung freigebenden Öffnungsstellung und einer die Hakenöffnung versperrenden Schließstellung beweglich ist und mit einem Lagerteil (3a) in eine Führung des Kupplungskörpers eingreift derart, daß durch Formschluß ein Verdrehen des Niederhalters (3) um eine vertikale Achse verhindert wird, dadurch **gekennzeichnet,** daß der Niederhalter in der Führung (1a, 11, 12) in Vertikalrichtung in eine Stellung beweglich ist, in welcher der Formschluß zwischen seinem Lagerteil (3a) und der Führung aufgehoben ist und der Niederhalter um eine vertikale Achse in die Lösestellung verdrehbar ist.

2. Hakenkupplung nach Anspruch 1, dadurch **gekennzeichnet,** daß der Niederhalter (3) einen zugleich das Lagerteil bildenden Kopf (3a) sowie einen sich an diesen in Vertikalrichtung anschließenden zylindrischen Schaft (3b) aufweist und daß die Führung des Kupplungskörpers zwei in der Schließstellung des Niederhalters dessen Kopf einschließende Führungswangen (11, 12) sowie eine sich daran in Vertikalrichtung anschließende Bohrung (1a) zur Aufnahme des Schafts (3b) des Niederhalters umfaßt.

3. Hakenkupplung nach einem der Ansprüche 1 oder 2, dadurch **gekennzeichnet,** daß der Niederhalter elastisch in die Stellung vorgespannt ist, in der sich sein Kopf (3a) in formschlüssigen Eingriff mit den Führungswangen (11, 12) der Führung befindet.

4. Hakenkupplung nach Anspruch 3, dadurch **gekennzeichnet,** daß der zylindrische Schaft (3b) des Niederhalters (3) eine nach unten offene Bohrung (3c) aufweist, in der eine einerseits am Niederhalter und andererseits am Kupplungskörper angreifende Feder (14) untergebracht ist.

5. Hakenkupplung nach einem der vorhergehenden Ansprüche, dadurch **gekennzeichnet,** daß ein den vertikalen Bewegungshub des Niederhalters (3) in der Führung (11, 12) des Kupplungskörpers begrenzendes Element (17) vorgesehen ist.

6. Hakenkupplung nach Anspruch 5, dadurch **gekennzeichnet,** daß das Element (17) eine in der Bohrung im Schaft des Niederhalters untergebrachte Kette ist.

7. Hakenkupplung nach einem der vorhergehenden Ansprüche, bei dem auf beiden Seiten des Hakens (2) je eine Fangschale (4, 5) angeordnet ist und der Niederhalter (3) mit einem im Überlastfall um eine senkrechte Achse verschwenkbaren Sicherungsriegel (10) versehen ist, dadurch **gekennzeichnet,** daß in beiden Fangschalen (4, 5) Ausnehmungen (4a, 5a) ausgebildet sind, in die der Sicherungsriegel (10) bei einer Schwenkbewegung eintaucht.

# FIG.1

8  4  4a  21  11  18  19  3  12a  12  5  5a  1b

6

10

9

7

1

2

1c

EP 0 393 216 A1

# FIG.2a

# FIG.2 b

# FIG.3a

# FIG.3b

# FIG.4

# FIG.5a

# FIG. 5b

# FIG.6

(a)

(b)

(c)

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 570 991 (M. AFFLARD) * Seite 2, Zeile 6 - Seite 3, Zeile 4; Figur 1 * | 1-2 | B 60 D 1/04 |
| Y | | 3 | |
| | --- | | |
| X | US-A-3 779 653 (W. CHARLTON) * Spalte 3, Zeilen 12-59; Figuren 1-4 * | 1 | |
| Y | | 3 | |
| | --- | | |
| A | US-A-3 712 642 (E. BURROUGHS) * Spalte 3, Zeile 31 - Spalte 4, Zeile 16; Figuren 2-4 * | 1-2 | |
| | --- | | |
| A | US-A-2 356 998 (G. HANIQUET) * Insgesamt * | 1-2 | |
| | --- | | |
| A | FR-A-2 115 000 (LA MECANO-SOUDURE-REMOISE) * Seite 8, Zeilen 33-40; Figur 9 * | 1,7 | |
| | ----- | | |

**RECHERCHIERTE SACHGEBIETE (Int. Cl.5)**

B 60 D
A 01 B

Der vorliegende Recherchenbericht wurde für alle Patentansprüche erstellt

| Recherchenort | Abschlußdatum der Recherche | Prüfer |
|---|---|---|
| DEN HAAG | 14-12-1989 | LINTZ C.H. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)